## Europäisches Patentamt

## European Patent Office

## Office européen des brevets

(11) Publication number: **0 098 747**
**B1**

## EUROPEAN PATENT SPECIFICATION

(45) Date of publication of patent specification: **07.01.88**

(51) Int. Cl.⁴: **F 16 J 15/34**

(21) Application number: **83303824.3**

(22) Date of filing: **30.06.83**

(54) Mechanical shaft seals.

(30) Priority: **01.07.82 GB 8219023**

(43) Date of publication of application:
**18.01.84 Bulletin 84/03**

(45) Publication of the grant of the patent:
**07.01.88 Bulletin 88/01**

(84) Designated Contracting States:
**AT BE CH DE FR IT LI LU NL SE**

(56) References cited:
**GB-A- 945 265**
**GB-A-1 513 940**

(73) Proprietor: **A.E.S. Engineering Limited**
**657 Attercliffe Road**
**Sheffield South Yorkshire, S9 3RE (GB)**

(72) Inventor: **Garrett, Keith Charles**
**3 Wilmer Drive**
**Shipley West Yorkshire, BD18 3BB (GB)**

(74) Representative: **Harrison, Michael Robert et al**
**URQUHART-DYKES & LORD 5th Floor Tower**
**House Merrion Way**
**Leeds LS2 8PA West Yorkshire (GB)**

Courier Press, Leamington Spa, England.

## Description

This invention relates to mechanical shaft seals, particularly to the type of shaft seal known as a fully-floating seal, and more particularly to the so-called stationary assembly of such a fully-floating seal.

Currently known shaft seals may either be of the stationary or rotary type. Both types of seal have a rotary assembly for attachment to a shaft, and a stationary assembly for attachment to a housing surrounding the shaft. In both types of seal, the stationary and rotary assemblies are provided with mating sealing faces which together form a seal between the two assemblies.

Seals are known in which the stationary assembly comprises a fixed portion and a further portion which carries the mating sealing face of the stationary assembly and also is in sealing engagement with its associated fixed portion of the stationary assembly. Such seals are generally referred to as stationary seals, and require one or more springs between the fixed and further portions of the stationary assembly to urge the mating sealing face of the stationary assembly towards that of the rotary assembly.

British Patent Specification No. 945265 describes such a stationary seal, in which the further portion of the stationary assembly is urged into sealing engagement with the rotary assembly by a spring. Because of the presence of the spring in the stationary assembly, this seal suffers from clogging when used with dirty fluids, and also suffers from wear at the seal face as a result of uneven spring forces exerted.

Also, seals are known in which the rotary assembly comprises a fixed portion and a further portion which carries the mating sealing face of the rotary assembly and also is in sealing engagement with the fixed portion of the rotary assembly. Such seals are generally referred to as rotary seals and require one or more springs between the fixed and further portions of the rotary assembly to urge the mating sealing face of the rotary assembly towards that of the stationary assembly.

The above-mentioned further portions of the respective assembly of each type of seal have been referred to as floating portions.

British Patent Specification No. 1513940 describes a seal which has separate fixed and floating portions in both the rotary and stationary assemblies, this type of seal being referred to as a fully-floating seal. In this seal, the floating and fixed portions of both the rotary and stationary assemblies are separated by springs urging the respective floating portions away from their associated fixed portions and towards each other to maintain a sealing interface between the two seal faces. The provision of such a fully-floating arrangement with dual springs allows the mating faces of the floating portions of both the rotary assembly and the stationary assembly to achieve a perpendicular relationship to the shaft, even if the shaft deviates from a perpendicular relationship to the housing. The springs also provide a considerable degree of accommodation for axial wear at the mating sealing faces during rotation of the shaft.

It has now been surprisingly discovered that by replacing the springs in the stationary assembly by means to allow relative pivotal or rocking movement between the floating and fixed portions of the stationary assembly but not in themselves urging the said fixed and floating portions away from each other, an unexpected advantage is attained over the fully-floating seal mentioned above.

In the seal described in British Patent Specification No. 1513940, the presence of springs in both the rotary and stationary assemblies results in uneven forces being exerted between the floating and fixed portions of each assembly when relative pivoting between these portions occurs. This causes uneven and indeed faster wear of the sealing faces than would occur if the portions were perfectly aligned.

The above-mentioned unexpected advantage achieved by the present invention is that sufficient axial accommodation can be provided by using a single set of springs in the rotary assembly. By also providing means in the stationary assembly to allow pivotal or rocking movement between the floating and fixed portions thereof without urging the said fixed and floating portions away from each other, there is achieved a fully-floating arrangement allowing relative pivoting of the floating and fixed portions of the stationary assembly, but without forces exerted therebetween. Thus there are no uneven forces exerted between these portions even when not perfectly aligned and the problems associated with wear are significantly reduced.

According to the present invention there is provided a stationary assembly for a fully-floating shaft seal for sealing a rotatable shaft to a fixed housing, said seal including a rotary assembly and a stationary assembly, the stationary assembly comprising a first annular member for surrounding the shaft and attachable to the housing, a second annular member have a radial face for mating with a radial face of the rotary assembly, and a third annular member between said first and second annular members, the arrangement being such that relative pivotal or rocking movement is permitted about a first axis between said first and third annular members, characterised in that means are located between said first and third annular members and also between said second and third annular members, said means spacing said third annular member from each of said first and second annular members such that pivotal or rocking movement is permitted about a second axis at right angles to the first axis between said second and third annular members, said pivotal or rocking movement between the annular members being without any axial force being exerted or originating from any member of the stationary assembly.

By pivotal or rocking movement is meant movement involving no overall axial movement, but a movement about any axis at right angles to the longitudinal axis of the members and passing through or close to said longitudinal axis.

Thus, since the first and second annular members of the stationary assembly are not urged away from each other by springs, there are consequently no uneven forces exerted between these fixed and floating portions of the stationary assembly, when relative pivoting between these portions occurs.

Also, in a seal incorporating a stationary assembly of the present invention, the radial face of the rotary assembly is free to be thrown into perfect perpendicular alignment by the centrifugal force created by the rotation of the shaft without uneven spring forces being exerted between the mating radial faces, since the mating radial faces of both assemblies are not urged together from both sides.

Said means may, for instance, be projections extending from either one of said first or third annular members and locating in recesses located in the other of said first or third annular member. Similar mating projections and recesses may be provided between said second and third annular members. By way of example a pair of diametrically opposed pins may be fixed in the first annular member and locate in corresponding recesses in the third annular member. The second pair of diametrically opposed pins, offset by 90° from the first mentioned pair of pins, may be fixed in the second annular member and locate in corresponding recesses in the third annular member. The first mentioned pair of pins allows pivotal or rocking movement about one axis between the first and third annular members, and the second pair of pins allows pivotal movement about the second and third annular members about an axis at right angles to the first mentioned axis. The overall effect is limited pivotal movement about any axis at right angles to the longitudinal axis of the assembly. The movement may be described as a sort of "universal joint" movement. The provision of pins and recesses also provides locking means to prevent relative rotation between the first, second and third annular members.

In other related embodiments in accordance with the present invention the pins may be replaced by integral projections such as triangular cross-section projections locating in corresponding triangular cross-section recesses in the other appropriate member.

An embodiment of the present invention will now be described by way of example only and with reference to the accompanying drawings in which:—

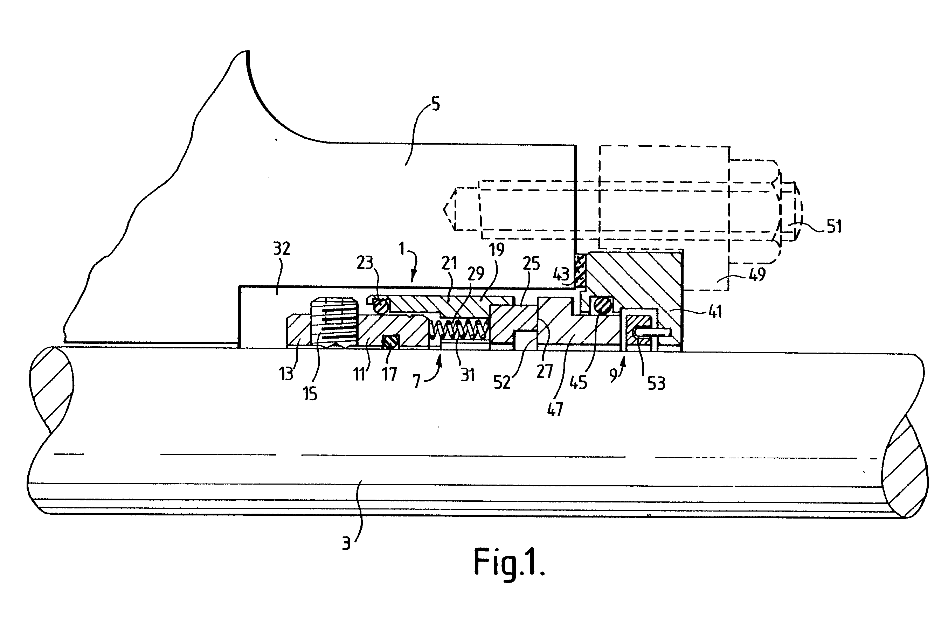

Figure 1 is a longitudinal section through a fully-floating shaft seal including a stationary assembly in accordance with the present invention; and,

Figure 2 is a longitudinal section through a stationary assembly in accordance with the present invention, similar to that forming part of the shaft seal of Figure 1.

Referring to the drawings, a fully-floating shaft seal is shown generally at 1 and provides sealing between a shaft 3 and a housing, such as a pump housing 5. The seal 1 comprises a rotary assembly 7 and a stationary assembly 9. Each assembly includes fixed and floating portions.

Rotary assembly 7 includes a fixed portion 11, the latter comprising an annular member 13 which is fixed to shaft 3 by means of grub screws 15. The fixed portion 11 is provided with an annular sealing ring 17 which bears directly against shaft 3.

The floating portion 19 of the rotary assembly 7 includes annular member 21 which is sealed to annular member 13 of the fixed portion 11 by means of rubber O-ring 23 located near that end of annular member 21 remote from stationary assembly 9. Attached to the other end of annular member 21 is an L-section rotary member 25 which carries a radial sealing face 27. Extending through annular member 21 between rotary member 25 and annular member 13 are a plurality of circumferentially spaced apart bores 29. Located within each bore 29 is a compression spring 31 which abuts at one end against a radial end face of annular member 13 and at the other end against rotary member 25, thereby urging floating portion 19 and its associated rotary member 25 away from fixed portion 11 and, in consequence, sealing face 27 is urged against the corresponding sealing face of the stationary assembly.

The rotary assembly 7 is located within an annular stuffing box 32 in housing 5. The design, including the dimensions of the floating portion 19 of the rotary assembly 7, is such that the forces within the stuffing box 32 due to the pressure of fluid therein are balanced in the action on floating member 19 in directions towards and away from the stationary assembly 9. By "balanced" it is not intended to imply that the forces in each direction exactly cancel each other out. Rather they are arranged so that there is a net resultant force towards stationary assembly 9 but this force is much less than would be the case if the design was such that there were no counter-acting forces in the opposite direction.

Stationary assembly 9 includes a fixed portion which is in the form of a first annular member 41 carrying a gasket 43 to seal it against housing 5 and an O ring 45 to seal it against a floating portion in the form of a second annular member 47 of the stationary assembly 9. First annular member 41 is clamped against the housing 5 by means of clamping member 49 and a plurality of nuts and bolts 51.

The second annular member 47 of the stationary assembly 9 extends from a position within ring 41 against which it is sealed by the above-mentioned O-ring 45 to its other end which is in the form of a radial sealing face 52 which bears against sealing face 27 of rotary member 25.

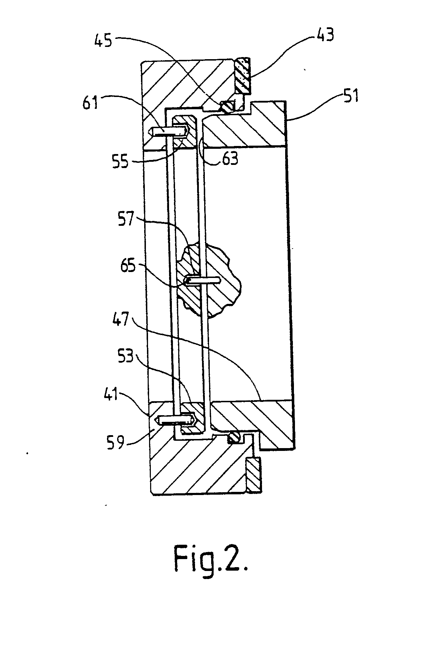

Between first annular member 41 and second annular member 47 there is located a third annular member 53. This third annular member 53 is shown more clearly in Figure 2. The third annular member 53 is provided with two pairs 55 and 57 of recesses. Recesses 55 are disposed diametrically opposite each other and their openings on a radial face of third annular member 53 face towards radially inwardly extending flange 59 of first annular member 41. Flange 59 is in turn provided with a pair of diametrically opposed pins 61 which extend out from the flange 59 in a direction parallel to the longitudinal axis of the assembly and the free ends of which are received as a loose fit in corresponding recesses 55. The relative lengths of recesses 55 and the portions of pins 61 extending from flange 59 is such that with the ends of pins 61 bearing against the closed ends of recesses 55 there is a small gap between third annular member 53 and flange 59.

Recesses 57 are diametrically opposed and their open ends face towards radial face 63 of second annular member 47. Recesses 57 are offset by 90° from the above-mentioned recesses 55. Second annular member 47 is provided with pins 65 which are similar to those pins 61 which extend from flange 59 of first annular member 41. Pins 65 locate in a loose fit in recesses 57 and the lengths of the pins and the recesses are such that, with the ends of the pins abutting against the closed ends of the recesses, there is a small gap between third annular member 53 and second annular member 47.

Accordingly it can be seen that second annular member 47 is anchored to the first annular member 41 by means of the third annular member 53 and the engagement of the two pairs of pins in their associated recesses. At the same time, the third annular member 53 is able to pivot or rock relative to the first annular member 41 about an axis passing through pins 55 and the longitudinal axis of the assembly. Furthermore, third annular member 43 and second annular member 47 are able to rock or pivot relative to each other about an axis passing through the recesses 57 and the longitudinal axis of the assembly. As a result second annular member 47, carrying radial sealing face 52, is able to rock or pivot relative to the first annular member 41 about any axis perpendicular to the longitudinal axis of the assembly. In this way, second annular member 47 is able to adjust itself to any lack of perpendicularity between the shaft 3 and the first annular member 41. At the same time, the absence of any spring means between second annular member 47 and the first annular member 41 means that any such relative pivoting between these members will not result in uneven forces being applied to second annular member 47 and hence to the sealing faces 27 and 52. Accordingly, the wearing forces to which these faces are exposed will be no greater than is the case when there is perfect perpendicularity of first annular member 41 to shaft 3. Any wearing of the faces or indeed any other mechanism as a result of which the longitudinal distance between fixed portion 11 of rotary assembly 7 and first annular member 41 of stationary assembly 9 is caused to change can easily be accommodated by springs 31 acting on floating portion 19 of rotary assembly 7.

## Claims

1. A stationary assembly for a fully-floating shaft seal (1) for sealing a rotatable shaft (3) to a fixed housing (5), said seal including a rotary assembly (7) and a stationary assembly (9), the stationary assembly (9) comprising a first annular member (41) for surrounding the shaft (3) and attachable to the housing (5), a second annular member (47) having a radial face (52) for mating with a radial face (27) of the rotary assembly (7), the stationary assembly (9) also including a third annular member (53) between said first and second annular members (41, 47), the arrangement being such that relative pivotal or rocking movement is permitted about a first axis between said first and third annular members (41, 53), characterised in that means are located between said first and third annular members (41, 53) and also between said second and third annular members (47, 53), said means spacing said third annular member (53) from each of said first and second annular members (41, 47) such that pivotal or rocking movement is permitted about a second axis at right angles to the first axis between said second and third annular members (47, 53), and in that the pivotal or rocking movement between the annular members (41, 47, 53) is without any axial force being exerted or originating from any member of the stationary assembly (9).

2. A stationary assembly according to Claim 1 further characterised in that the means located between each pair of annular members (41, 53 and 47, 53) to be spaced comprises projections extending from either one of said annular members of the pair and locating in recesses located in the other annular member of the pair.

3. A stationary assembly according to Claim 2 further characterised in that said projections are a pair of diametrically opposed pins (61, 65).

4. A stationary assembly according to Claim 2 further characterised in that the projections comprise integral triangular cross-section projections mating in corresponding triangular cross-section recesses in the other appropriate annular member.

## Patentansprüche

1. Stationäre Einrichtung für eine vollständig freibewegliche Wellendichtung (1) zum Abdichten einer drehbaren Welle (3) gegenüber einem feststehenden Gehäuse (5), wobei die Dichtung eine Dreheinrichtung (7) und eine stationäre Einrichtung (9) aufweist, die ein die Welle (3) umgebendes und an dem Gehäuse (5) anbringbares erstes ringförmiges Element (41), ein zweites ringförmiges Element (47) mit einer radialen Fläche (52), die mit einer radialen Fläche (27) der Dreheinrichtung (7) zusammenpaßt, und ein drittes ringförmiges Element (53) zwischen dem ersten und dem zweiten ringförmigen Element (41, 47) aufweist, und die Anordnung derart ist, daß eine Dreh- oder Hin- und Herbewegung um eine erste Achse zwischen dem ersten und dem dritten ringförmigen Element (41, 53) möglich ist, dadurch gekennzeichnet, daß zwischen dem ersten und dem dritten ringförmigen Element (41, 53) und zwischen dem zweiten und dem dritten ringförmigen Element (47, 53) Vorrichtungen angeordnet sind, die das dritte ringförmige Element (53) von dem ersten und von dem zweiten ringförmigen Element (41, 47) derart im Abstand halten, daß Dreh- oder Hin- und Herbewegungen um eine senkrecht auf der ersten Achse stehende zweite Achse zwischen dem zweiten und dem dritten ringförmigen Element (47, 53) möglich sind, und daß die Dreh- oder Hin- und Herbewegung zwischen den ringförmigen Elementen (41, 47, 53) ohne Axialkraft erfolgt, die von irgendeinem Teil der stationären Einrichtung (9) ausgeübt oder hervorgerufen wird.

2. Stationäre Einrichtung nach Anspruch 1, dadurch gekennzeichnet, daß die Vorrichtungen, die sich zwischen jedem Paar von im Abstand zueinander anzuordnenden ringförmigen Elementen (41, 53 und 47, 53) befinden, Vorsprünge aufweisen, die sich von einem der beiden ringförmigen Elemente eines Paares aus erstrecken und sich in Vertiefungen befinden, die in dem anderen ringförmigen Element des Paares angeordnet sind.

3. Stationäre Einrichtung nach Anspruch 2, dadurch gekennzeichnet, daß die Vorsprünge als ein Paar sich diametral gegenüberliegender Stifte (61, 65) ausgebildet sind.

4. Stationäre Einrichtung nach Anspruch 2, dadurch gekennzeichnet, daß die Vorsprünge integrale im Querschnitt dreieckige Vorsprünge sind, die mit entsprechenden im Querschnitt dreieckigen Vertiefungen in dem anderen zugehörigen ringförmigen Element zusammenpassen.

**Revendications**

1. Ensemble fixe pour joint d'étanchéité totalement flottant (1) pour arbre, ce joint permettant d'assurer l'étanchéité d'un arbre rotatif (3) par rapport à un carter fixe (5) et comprenant un ensemble rotatif (7) et un ensemble fixe (9), cet ensemble fixe (9) comportant une première pièce annulaire (41) destinée à entourer l'arbre (3) et pouvant être fixée sur le carter (5), une seconde pièce annulaire (47) présentant une face radiale (52) destinée à coopérer avec une face radiale (27) de l'ensemble rotatif (7), cet ensemble fixe (9) comportant aussi une troisième pièce annulaire (53) disposée entre lesdites première et seconde pièces annulaires (41, 47), l'agencement étant tel qu'un mouvement de basculement ou de pivotement relatif est permis, autour d'un premier axe, entre lesdites première et troisième pièces annulaires (41, 53), caractérisé en ce que des moyens sont disposés entre ces première et troisième pièces annulaires (41, 53), ainsi qu'entre lesdites seconde et troisième pièces annulaires (47, 53) ces moyens maintenant la troisième pièce annulaire (53) espacée de chacune des première et seconde pièces annulaires (41, 47) de façon qu'un mouvement de basculement ou de pivotement soit permis, autour d'un second axe disposé à angle droit par rapport au premier axe, entre lesdites seconde et troisième pièces annulaires (47, 53), le mouvement de basculement ou de pivotement entre les pièces annulaires (41, 47, 53) s'effectuant sans qu'aucune force axiale ne s'exerce sur une pièce quelconque de l'ensemble fixe (9) ou n'en provienne.

2. Ensemble fixe selon la revendication 1, caractérisé en outre en ce que les moyens disposés entre chaque paire de pièces annulaires (41, 53 et 47, 53) à maintenir espacées sont constitués par des saillies qui s'étendent à partir de l'une desdites pièces annulaires constituant cette paire et qui s'engagent dans des cavités ménagées dans l'autre pièce annulaire de cette paire.

3. Ensemble fixe selon la revendication 2, caractérisé en outre en ce que lesdites saillies sont une paire de broches diamétralement opposées (61, 65).

4. Ensemble fixe selon la revendication 2, caractérisé en outre en ce que les saillies sont constituées par des saillies venues de matière et à section transversale triangulaire qui s'engagent dans des cavités à section transversale triangulaire correspondantes ménagées dans l'autre pièce annulaire qui convient.

Fig.1.

Fig.2.